(19) Europäisches Patentamt / European Patent Office / Office européen des brevets

(11) **EP 3 783 116 B1**

(12) **FASCICULE DE BREVET EUROPEEN**

(45) Date de publication et mention
de la délivrance du brevet:
**26.04.2023 Bulletin 2023/17**

(21) Numéro de dépôt: **20156836.7**

(22) Date de dépôt: **06.09.2013**

(51) Classification Internationale des Brevets (IPC):
*C21D 1/74 (2006.01)*    *B62D 29/00 (2006.01)*
*C21D 1/76 (2006.01)*    *C21D 3/04 (2006.01)*
*C21D 8/02 (2006.01)*    *C21D 8/04 (2006.01)*
*C23C 2/02 (2006.01)*    *C23C 2/12 (2006.01)*
*C21D 1/34 (2006.01)*    *C21D 1/52 (2006.01)*
*C21D 1/673 (2006.01)*    *B32B 15/01 (2006.01)*
*C22C 38/00 (2006.01)*    *C22C 38/02 (2006.01)*
*C22C 38/06 (2006.01)*    *C22C 38/28 (2006.01)*
*C22C 38/32 (2006.01)*    *C23C 2/26 (2006.01)*
*C23C 2/28 (2006.01)*    *C23C 2/40 (2006.01)*
*C22C 38/04 (2006.01)*

(52) Classification Coopérative des Brevets (CPC):
**C21D 8/0278; B32B 15/012; B32B 15/013;
C21D 1/34; C21D 1/52; C21D 1/673; C21D 1/74;
C21D 1/76; C21D 3/04; C21D 6/002; C21D 6/005;
C21D 6/008; C21D 8/0205; C21D 8/0236;
C21D 8/0257;**    (Cont.)

(54) **TÔLES PREREVÊTUES PERMETTANT LA FABRICATION DE PIECES D'ACIER REVÊTUES ET DURCIES A LA PRESSE**

VORBESCHICHTETE BLÄTTER, DIE DIE HERSTELLUNG VON DRUCKGEHÄRTETEN UND BESCHICHTETEN STAHLTEILEN ERLAUBEN

PRE-COATED SHEETS ALLOWING THE PRODUCTION OF PRESS-HARDENED AND COATED STEEL PARTS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.09.2012 PCT/FR2012/000350**

(43) Date de publication de la demande:
**24.02.2021 Bulletin 2021/08**

(62) Numéro(s) de document de la (des) demande(s)
initiale(s) en application de l'article 76 CBE:
**13803200.8 / 2 893 047**

(73) Titulaire: **ArcelorMittal
1160 Luxembourg (LU)**

(72) Inventeurs:
• **PUERTA VELASQUEZ, Juan David
57000 METZ (FR)**
• **STAUDTE, Jonas
57950 MONTIGNY-LES-METZ (FR)**

• **DRILLET, Pascal
57160 ROZERIEULLES (FR)**

(74) Mandataire: **Lavoix
2, place d'Estienne d'Orves
75441 Paris Cedex 09 (FR)**

(56) Documents cités:
**WO-A2-2011/069906    JP-A- 2006 104 546**

• **H. KARBASIAN ET AL: "A review on hot
stamping", JOURNAL OF MATERIALS
PROCESSING TECHNOLOGY, vol. 210, no. 15, 1
novembre 2010 (2010-11-01), pages 2103-2118,
XP055141086, ISSN: 0924-0136, DOI:
10.1016/j.jmatprotec.2010.07.019**

(52) Classification Coopérative des Brevets (CPC):
(Cont.)
**C21D 8/0457; C22C 38/002; C22C 38/02;**
**C22C 38/04; C22C 38/06; C22C 38/28;**
**C22C 38/32; C23C 2/02; C23C 2/06; C23C 2/12;**
**C23C 2/26; C23C 2/28; C23C 2/40**

**Description**

L'invention concerne des tôles d'acier laminées à froid et recuites, pré-revêtues, qui peuvent être chauffées, embouties puis durcies lors d'un refroidissement obtenu par maintien au sein d'un outil de presse. Les pièces ainsi obtenues sont notamment destinées à être utilisées comme éléments de structure dans les véhicules automobiles pour assurer des fonctions d'anti-intrusion ou d'absorption d'énergie. De telles pièces peuvent être aussi utilisées par exemple pour la fabrication d'outils ou de pièces de machines agricoles.

Dans ce type d'applications, on cherche à réaliser des pièces en acier combinant une résistance mécanique élevée, une grande résistance aux chocs, une bonne tenue à la corrosion, et une bonne précision dimensionnelle. Cette combinaison est particulièrement désirable dans l'industrie automobile où l'on recherche un allègement significatif des véhicules. Des pièces anti-intrusion ou des pièces participant à la sécurité des véhicules automobiles telles que les traverses de pare-choc, renforts de portière ou de pied milieu, nécessitent par exemple les qualités mentionnées ci-dessus. Ceci peut être notamment obtenu grâce à des pièces d'aciers dont la microstructure est martensitique ou bainito-martensitique.

La fabrication de telles pièces est connue d'après les publications FR2780984 et FR2807447 selon lesquelles un flan découpé dans une tôle d'acier pour traitement thermique, pré-revêtu d'un métal ou d'un alliage métallique, est chauffé dans un four puis déformé à chaud. Le pré-revêtement peut être de l'aluminium ou un alliage d'aluminium, du zinc ou un alliage de zinc. Lors du chauffage en four, le pré-revêtement assure une protection de la surface de l'acier contre la décarburation et la formation de calamine. Lors du chauffage en four, ce pré-revêtement s'allie avec le substrat d'acier pour former un composé apte à la mise en forme à chaud et ne provoquant pas de dégradation de l'outillage. Le maintien de la pièce dans l'outillage après que la mise en forme a été réalisée, permet un refroidissement rapide qui conduit à l'obtention de microstructures de trempe présentant de très hautes caractéristiques mécaniques. Un tel procédé est connu sous le nom de durcissement par trempe sous presse ou « press hardening ».

En règle générale, on évalue les caractéristiques mécaniques des pièces ainsi obtenues au moyen d'essais de traction et de dureté. Les documents précités divulguent ainsi des procédés de fabrication permettant d'obtenir une résistance mécanique (ou résistance à la rupture en traction) Rm de 1500 MPa à partir d'un flan d'acier présentant une résistance initiale Rm de 500 MPa avant chauffage et refroidissement rapide.

Cependant, les conditions de service de certaines pièces durcies et revêtues nécessitent non seulement une valeur élevée de résistance Rm, mais également une bonne aptitude au pliage. Ce paramètre apparaît en effet comme plus pertinent que l'allongement à rupture mesuré en traction, pour garantir que la pièce présente une ductilité suffisante pour absorber des déformations ou des chocs sans risque de rupture, notamment dans des zones correspondant à des concentrations locales de contraintes dues à la géométrie de la pièce ou à la présence éventuelle de micro-défauts à la surface des pièces.

Le document WO2009080292 divulgue un procédé permettant d'augmenter l'angle de pliage d'une pièce durcie : selon ce procédé, une tôle d'acier est chauffée dans un four de recuit à une température comprise entre 650 et 800°C de manière à obtenir une couche d'oxyde d'épaisseur nettement supérieure à 0,3 micromètres. Certains éléments d'alliage de l'acier sont oxydés sous cette couche d'oxyde. On réduit ensuite partiellement cette couche d'oxyde de façon à ce que celle-ci présente une épaisseur supérieure à 0,3 micromètres. L'extrême surface de la couche d'oxyde réduite est constituée de fer pur. La tôle est ensuite revêtue au trempé. Après cette étape, la tôle comporte les différentes couches successives suivantes : le substrat en acier comportant des éléments oxydés au voisinage de la surface (oxydation interne), ce substrat étant surmonté d'une couche d'oxyde partiellement réduite, elle-même surmontée du revêtement déposé au trempé. Lors de l'étape ultérieure d'austénitisation du flan, et/ou durant la mise en forme et le refroidissement, une fine couche ductile se forme sous le revêtement, de telle sorte que les fissures formées durant le revêtement lors de la mise en forme se propagent moins aisément dans cette couche sous-jacente.

Cependant, la couche d'oxydes qui est présente au moment où la tôle est immergée dans le bain métallique de revêtement, peut se révéler néfaste pour l'adhésion du revêtement au trempé sur cette couche.

On recherche donc un procédé de fabrication qui ne présenterait pas cet inconvénient et qui permettrait d'obtenir simultanément, après durcissement par trempe sous presse, des caractéristiques élevées de traction et de pliage. En outre, on sait que les conditions de fabrication industrielles comportent de façon inévitable une certaine variabilité : par exemple, le cycle de température lors du recuit de la tôle avant revêtement, la composition et/ou le point de rosée de l'atmosphère des fours de recuit continu, peuvent légèrement varier lors d'une même séquence de fabrication, ou varier d'une campagne de fabrication à une autre. Même si les plus grandes précautions sont prises pour minimiser ces variations, on cherche à disposer d'un procédé de fabrication tel que les caractéristiques mécaniques, et notamment l'aptitude au pliage, obtenues après durcissement par trempe sous presse, soient très peu sensibles à cette variation éventuelle des conditions de fabrication. On recherche en outre un procédé de fabrication conduisant à une bonne isotropie des pièces après emboutissage à chaud, c'est-à-dire dont l'aptitude au pliage dépende peu du sens de sollicitation par rapport à la direction de laminage de la tôle.

De plus, on sait que la durée de séjour des flans dans les fours, lors de l'étape d'austénitisation avant emboutissage à chaud, peut influencer les caractéristiques mécaniques des pièces. On cherche donc à disposer d'un procédé de fabrication qui soit peu sensible à la durée de maintien en four afin d'obtenir une grande reproductibilité des caractéristiques mécaniques des pièces.

Dans le cas de pièces fabriquées à partir de tôles pré-revêtues de zinc ou d'alliage de zinc, on cherche à disposer d'un procédé permettant un soudage de ces pièces, sans risque de fragilisation des joints de grains par pénétration du zinc liquide.

Le document WO 2011/069906 A2 divulgue des tôles laminées à froid et recuites pré-revêtues avec des couches décarburées entre 10 et 200 microns.

La présente invention a pour but de résoudre les problèmes évoqués ci-dessus au moyen d'un procédé de fabrication économique.

De façon surprenante, les inventeurs ont mis en évidence qu'une aptitude élevée au pliage des pièces, était obtenue lorsqu'une zone décarburée d'une épaisseur spécifique était présente sous le pré-revêtement métallique, avant le durcissement par trempe sous presse de la pièce. D'une manière surprenante, cette décarburation spécifique avant durcissement, conduit à des résultats de pliage qui dépendent peu des conditions de recuit continu avant revêtement, et qui traduisent une bonne isotropie par rapport au sens de laminage, des valeurs de pliage élevées sont obtenues malgré la présence d'oxydes dans cette zone décarburée, ce qui correspond à un enrichissement en oxygène dans cette zone.

Dans ce but, l'invention a pour objet une tôle laminée à froid et recuite , pré-revêtue, pour la fabrication de pièces durcies par trempe sous presse, tel que définie dans les revendications attachées.

D'autres caractéristiques et avantages de l'invention apparaîtront au cours de la description ci-dessous donnée à titre d'exemple et faite en référence aux figures jointes suivantes :

La figure 1 présente la microstructure d'une tôle d'acier pré-revêtue selon l'invention, destinée à la fabrication de pièces durcies par trempe sous presse.

La figure 2 illustre schématiquement la définition de la profondeur de la zone adoucie d mesurée par microdureté sous le revêtement d'une pièce durcie par trempe sous presse.

La figure 3 illustre schématiquement la définition, pour une tôle ou un flan pré-revêtu, de la profondeur de décarburation de la surface $p_{50\%}$, mesurée par spectroscopie à décharge luminescente, sous le pré-revêtement de la tôle ou du flan avant durcissement par trempe sous presse.

La figure 4 présente la variation de l'angle de pliage critique $\alpha_c$ d'une pièce revêtue durcie par trempe sous presse, en fonction de la profondeur de la zone adoucie superficielle, celle-ci étant mesurée par microdureté sous le revêtement.

La figure 5 présente la variation de l'angle de pliage critique $\alpha_c$ d'une pièce revêtue durcie par trempe sous presse, en fonction de la profondeur de décarburation $p_{50\%}$, celle-ci étant mesurée sur le flan pré-revêtu avant emboutissage à chaud et trempe.

La figure 6 montre l'influence du point de rosée dans une zone particulière du four lors du recuit avant prérevêtement, sur l'angle critique de pliage de la pièce après emboutissage à chaud.

La figure 7 montre l'influence du point de rosée dans une zone particulière du four lors du recuit avant prérevêtement, sur la profondeur de décarburation $p_{50\%}$, ce dernier paramètre étant mesuré sur le flan pré-revêtu avant emboutissage à chaud et trempe.

La figure 8 montre la microstructure de l'acier sous le revêtement de zinc, après durcissement par trempe sous presse, pour un point de rosée de - 27°C.

La figure 9 illustre également la microstructure de l'acier sous le revêtement de zinc, après durcissement par trempe sous presse, pour un point de rosée de -7°C.

La figure 10 illustre la variation, avant emboutissage à chaud, de la teneur en carbone du substrat d'acier de deux tôles d'acier pré-revêtues, au voisinage de leur interface avec le pré-revêtement, le recuit des tôles ayant été effectué dans une atmosphère A2a avec un point de rosée de -27°C ou de -7°C.

La figure 11 illustre la variation de la teneur en carbone de deux pièces d'acier embouties à chaud, au voisinage de l'interface avec le revêtement de ces pièces, le recuit des tôles utilisées pour la fabrication de ces pièces ayant été effectué dans une atmosphère A2a avec un point de rosée de -27°C ou de -7°C.

Les figures 12 et 13 illustrent des oxydes internes formés lors du recuit dans le substrat d'acier, au voisinage de la surface.

Les figures 14 et 15 présentent deux spectres d'analyse de la dispersion en énergie de rayonnement X de ces oxydes.

La figure 16 illustre la variation de la teneur en oxygène relative (O/ $O_0$) sous le pré-revêtement, dans des tôles fabriquées selon l'invention.

L'épaisseur de la tôle d'acier laminée à froid mise en œuvre dans le procédé selon l'invention est comprise préférentiellement entre 0,5 et 2,6 mm environ, gamme d'épaisseur utilisée notamment dans la fabrication de pièces structurales ou de renfort pour l'industrie automobile.

L'acier est un acier pour traitement thermique, c'est-à-dire un acier capable de durcissement après austénitisation et refroidissement rapide par trempe.

L'acier contient les éléments suivants, la composition étant exprimée en poids :

- une teneur en carbone comprise entre 0,07 et 0,5%, préférentiellement entre 0,09 et 0,38% en poids, et très préférentiellement entre 0,15 et 0,25% en poids. Cet élément joue un grand rôle sur la trempabilité et sur la résistance mécanique obtenue après le refroidissement qui suit le traitement d'austénitisation. Au-dessous d'une teneur de 0,07% en poids, l'aptitude à la trempe est réduite et la résistance mécanique est insuffisante après durcissement par trempe sous presse. Une teneur de 0,15%C permet de garantir une trempabilité suffisante dans les zones les plus déformées à chaud. Au-delà d'une teneur de 0,5 % en poids, le risque de formation de défauts est accru lors de la trempe, particulièrement pour les pièces de plus forte épaisseur. Il devient également difficile de garantir une ductilité lors du pliage de pièces après durcissement par trempe sous presse. Une teneur en carbone comprise entre 0,09 et 0,38% permet d'obtenir une résistance Rm comprise entre 1000 et 2050 MPa environ lorsque la microstructure de la pièce est totalement martensitique.
- outre son rôle de désoxydant, le manganèse a également un effet important sur la trempabilité en particulier lorsque sa teneur en poids est supérieure à 0,5%, et préférentiellement supérieure à 0,8%. Cependant, on limite son addition à 3% en poids, et très préférentiellement à 1,5% de façon à éviter une ségrégation excessive.
- la teneur en silicium de l'acier doit être comprise entre 0,02 et 0,5 % en poids, et de préférence entre 0,1 et 0,35%. Outre son rôle sur la désoxydation de l'acier liquide, cet élément contribue au durcissement de l'acier mais sa teneur doit être cependant limitée pour éviter la formation excessive d'oxydes et pour ne pas nuire à la revêtabilité au trempé.
- au delà d'une teneur supérieure à 0,01%, le chrome augmente la trempabilité et contribue à l'obtention d'une résistance importante après l'opération de formage à chaud. Au delà d'une teneur égale à 1%, (préférentiellement 0,3%), l'effet du chrome sur l'homogénéité des propriétés mécaniques dans la pièce est saturé. La teneur en chrome dans l'invention est limitée à 1%.
- l'aluminium est un élément favorisant la désoxydation et la précipitation de l'azote. En quantité excessive, il se forme des aluminates grossiers lors de l'élaboration qui tendent à diminuer la ductilité, ce qui incite à limiter la teneur en aluminium à 0,25 % en poids. Une teneur minimale de 0,001% permet de désoxyder l'acier à l'état liquide lors de l'élaboration. La teneur en aluminium dans l'invention est limitée à 0.25% en poids.
- en quantités excessives, le soufre et le phosphore conduisent à une fragilité augmentée. C'est pourquoi, dans l'invention, on limite leur teneur respective à 0,05 et 0,1 % en poids.
- le bore, dont la teneur doit être comprise entre 0,0005 et 0,010 % en poids, et de préférence entre 0,002 et 0,005% en poids, est un élément qui joue un rôle Important sur la trempabilité. Au-dessous d'une teneur de 0,0005%, on n'obtient pas un effet suffisant sur la trempabilité. Le plein effet est obtenu pour une teneur de 0,002%. La teneur maximale en bore doit être inférieure à 0,010%, et préférentiellement 0,005%, pour ne pas dégrader la ténacité.
- Le titane a une forte affinité pour l'azote. Il protège le bore de façon à ce que cet élément se trouve sous forme libre pour jouer son plein effet sur la trempabilité. Au-delà de 0,2%, il existe cependant un risque de former des nitrures de titane grossiers dans l'acier liquide qui jouent un rôle néfaste sur la ténacité. Dans l'invention la teneur en titane est limitée à 0.2 % en poids. Il est compris préférentiellement entre 0,02 et 0,1%.
- A titre optionnel, l'acier peut également contenir du calcium en quantité comprise entre 0,0005 et 0,005% : en se combinant avec l'oxygène et le soufre, le calcium permet d'éviter la formation d'inclusions de grande taille qui sont néfastes pour la ductilité des tôles ou des pièces ainsi fabriquées.

Le reste de la composition de l'acier est constitué de fer et d'impuretés inévitables résultant de l'élaboration, en particulier d'oxygène, présent sous forme d'oxydes.

Un acier préféré est le 22MnB5 contenant 0,20-0,25%C, 1,1-1,35%Mn, 0,15-0,35%Si, 0,02-0,06%Al, 0,02-0,05%Ti, 0,02-0,25%Cr, 0,002-0,004%B, le solde étant du fer et des impuretés inévitables.

Les inventeurs ont recherché en premier lieu les conditions qui permettaient d'obtenir une bonne aptitude au pliage après durcissement par trempe sous presse. Cette caractéristique est mesurée en soumettant la pièce à une flexion trois points. La pièce est pliée progressivement sur des rouleaux en flexion trois points, la charge appliquée étant mesurée simultanément. On mesure l'angle de pliage critique $\alpha_c$ lors de l'apparition de fissures dans la pièce, ceci s'accompagnant d'une décroissance instantanée de la charge appliquée. De telles conditions d'essais sont décrites dans la norme DIN VDA 238-100. Pour une charge de rupture Rm de l'ordre de 1300-1600 MPa, un angle de pliage critique supérieur à 55° est requis afin de satisfaire aux spécifications. On recherche même préférentiellement un angle de pliage critique supérieur à 60° pour satisfaire des conditions d'utilisation plus sévères.

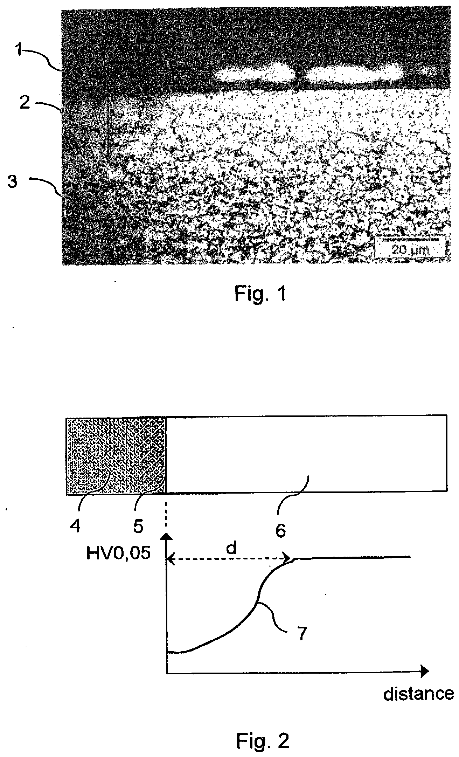

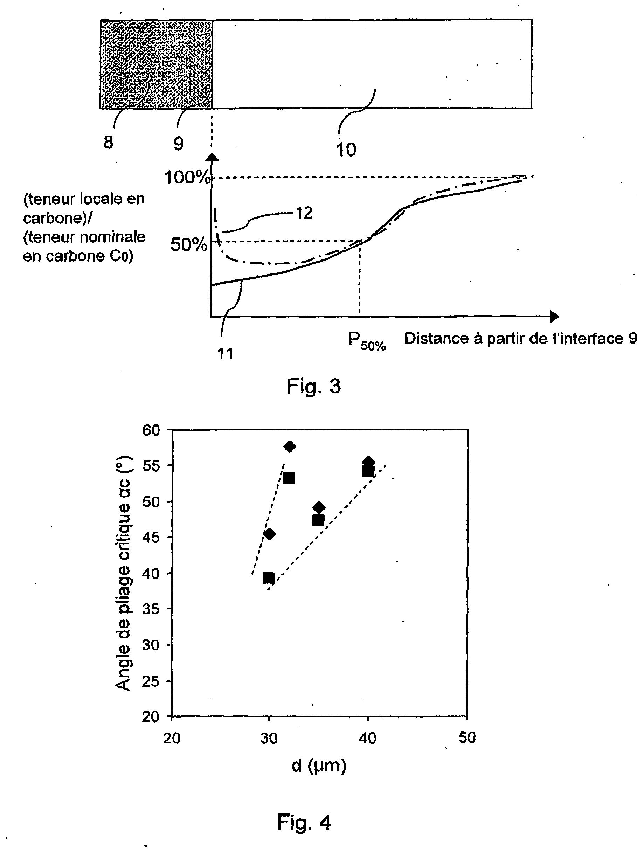

Grâce à un procédé de fabrication qui sera détaillé ci-dessous, les inventeurs ont fabriqué des pièces, à partir de flans d'acier de 22MnB5 de 1,2mm d'épaisseur pré-revêtus de zinc galvanisé-allié («galvannealed »), embouties à chaud après chauffage à 880°C et maintien pendant 5 minutes, ne différant que par la présence d'une couche adoucie plus ou moins importante située sous le revêtement. La méthode de détermination de la profondeur de cette zone adoucie est illustrée schématiquement à la figure 2 : après durcissement par trempe sous presse, la pièce est constituée d'un substrat d'acier pour traitement thermique 6, d'un revêtement 4 séparé du substrat par l'interface 5. On notera que ce schéma ne vise pas à reproduire les dimensions respectives des différentes zones. On effectue des mesures de dureté sous une très faible charge (par exemple des duretés Vickers sous une charge de 50 grammes, HV0,05) dans le substrat à partir de l'interface 5, de façon à obtenir la courbe 7 illustrant le profil de microdureté. On en déduit la valeur d qui caractérise la profondeur de la zone adoucie. On a porté à la figure 4 l'angle de pliage critique $\alpha_c$ mesuré pour des valeurs de d variant approximativement entre 30 et 40 micromètres. Pour une faible profondeur de zone adoucie, les pièces embouties à chaud ne satisfont pas à l'exigence $\alpha_c \geq 55°$. Cependant, pour les zones adoucies plus profondes, on observe que la relation est entachée d'une grande dispersion : pour une valeur donnée de d, par exemple 35 micromètres, il n'est pas possible de déterminer avec certitude si la pièce emboutie à chaud satisfera au critère requis. On a également observé que les microstructures correspondant à ces zones adoucies de largeur variable sont très semblables après durcissement par trempe sous presse. De plus, la microstructure de ces zones adoucies peut être totalement martensitique, c'est-à-dire qu'il n'est pas possible de la distinguer aisément par microscopie optique classique. En d'autres termes, les inventeurs ont mis en évidence que, ni la profondeur des zones adoucies mesurées sur les pièces durcies par trempe sous presse, ni l'observation microstructurale optique des zones adoucies de ces pièces, ne sont des paramètres permettant de garantir de façon fiable une valeur minimale pour l'angle de pliage.

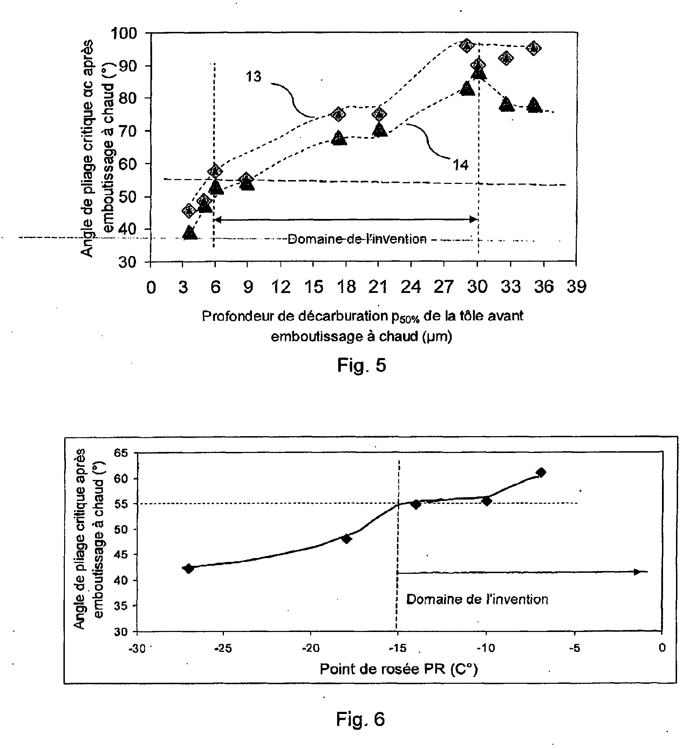

D'une manière surprenante, les inventeurs ont mis en évidence qu'il convenait de déterminer, non pas sur la pièce durcie par trempe sous presse, mais sur la tôle ou le flan pré-revêtu avant durcissement, la profondeur de décarburation, pour obtenir le résultat souhaité. La méthode de détermination est illustrée à la figure 3 dont le schéma ne vise pas à reproduire à l'échelle les dimensions respectives des différentes zones : la tôle, ou le flan sont constitués d'un substrat d'acier 10, d'un pré-revêtement 8 séparé du substrat par l'interface 9. A partir de cet interface, on mesure, par spectroscopie de décharge luminescente (ou GODES, « Glow Discharge Optical Emission Spectrometry, technique connue en elle-même) la profondeur $p_{50\%}$ à laquelle la teneur en carbone est égale à 50% de la teneur en carbone nominale $C_0$ du substrat 10. Le profil de concentration peut présenter une décroissance régulière du carbone depuis le substrat jusqu'à l'interface (profil 11) ou bien un minimum situé à peu de distance de l'interface (profil 12) Ce dernier cas traduit un enrichissement en carbone localisé au voisinage de l'extrême surface qui n'a pas d'influence en pratique sur les propriétés mécaniques après emboutissage à chaud. Dans le cas du profil 12, la profondeur $p_{50\%}$ à prendre en compte se situe au-delà de cet enrichissement très superficiel, comme le montre la figure 3. Grâce à un procédé de fabrication qui sera détaillé ci-dessous, les inventeurs ont fabriqué des tôles de 22MnB5 de 1,2mm d'épaisseur pré-revêtues de zinc galvanisé-allié («galvannealed ») différant par la présence d'une couche décarburée plus ou moins importante située sous le pré-revêtement. Ces tôles ont été découpées pour obtenir des flans qui ont été chauffés en four à 880°C pendant 5 minutes, puis embouts à chaud pour obtenir des pièces. Celles-ci ont été soumises à des essais de pliage dont les résultats sont illustrés à la figure 5, la flexion lors du pliage s'exerçant soit dans un sens parallèle au sens du laminage (courbe 13) soit dans un sens perpendiculaire (courbe 14). Contrairement aux résultats présentés à la figure 4, on observe que la profondeur de la zone décarburée avant durcissement par trempe sous presse, permet de prévoir de façon satisfaisante les propriétés de la pièce après durcissement par trempe sous presse. Pour obtenir une valeur d'angle critique de pliage $\alpha_c \geq 55°$ (pliage sens parallèle au laminage), la profondeur de la zone décarburée $p_{50\%}$ ne doit pas être inférieure à 6 micromètres. Pour que cette condition soit remplie quelle que soit l'orientation par rapport au sens de laminage, la profondeur de la décarburation $p_{50\%}$ ne doit pas être inférieure à 9 micromètres. Pour obtenir une valeur $\alpha_c \geq 55°$, quelle que soit l'orientation par rapport au sens de laminage, la profondeur de la décarburation $p_{50\%}$ ne doit pas être inférieure à 12 micromètres. D'une manière surprenante, on observe cependant qu'au-delà d'une profondeur $p_{50\%}$ de 30 micromètres, l'aptitude au pliage n'est pas améliorée, voire même légèrement diminuée lorsque la flexion s'exerce dans le sens perpendiculaire au laminage. De plus, l'écart de l'aptitude au pliage entre le sens parallèle et le sens perpendiculaire au laminage, a tendance à s'accroître. Ainsi, pour satisfaire les exigences mécaniques, la valeur de $p_{50\%}$ doit être comprise entre 6 et 30 micromètres, préférentiellement entre 9 et 30, et très préférentiellement entre 12 et 30 micromètres.

Le procédé pour obtenir la tôle laminée selon l'invention va être maintenant décrit : on approvisionne tout d'abord un acier pour traitement thermique, comme on l'a indiqué ci-dessus. Celui-ci est sous forme de tôle laminée à froid, plane. Le traitement thermique de recuit exposé ci-dessous a notamment pour but de provoquer une recristallisation de la microstructure écrouie par le laminage à froid. Après un dégraissage optionnel et un nettoyage électrolytique pour obtenir une surface exempte de pollution, une profondeur de décarburation $p_{50\%}$ comprise entre 6 et 30 micromètres peut être obtenue grâce aux procédés suivants :

selon un premier mode, la tôle est soumise à un traitement thermique au défilé dans un four chauffé au moyen de tubes radiants (ou « RTF », radiant tube furnace), ou par résistance, ou par induction, ou par une combinaison quelconque de ces différents moyens. Ceux-ci présentent la caractéristique que l'atmosphère régnant dans les différentes parties du four peut être ajustée de façon indépendante de ces moyens de chauffage. Le four comporte plusieurs zones (préchauffe, chauffe, maintien, refroidissement) où règnent différentes conditions de température et/ou d'atmosphère :

on préchauffe la tôle jusqu'à une température T1a dans une zone où l'atmosphère (désignée par A1) contient de 2 à 15% en volume d'hydrogène, préférentiellement 3-5% en volume d'hydrogène, le solde étant de l'azote et des impuretés inévitables dans le gaz, avec un point de rosée compris entre -60 et -15°C. Il est connu que le point de rosée caractérise le potentiel d'oxydation de l'atmosphère en question. La tôle en défilement passe ensuite dans une autre zone du four où l'on injecte à partir d'une température T1a, de l'eau sous forme liquide ou sous forme vapeur, ou de l'oxygène, ou encore une combinaison de ces différents éléments, de façon à augmenter le point de rosée de l'atmosphère. L'injection ne doit pas être réalisée à une température T1a inférieure à 600°C qui conduirait à une oxydation du fer à basse température. Préférentiellement, l'injection est effectuée à une température T1a supérieure à Ac1, température de début de transformation austénitique de l'acier au chauffage. En effet, au-delà de cette température, le carbone se trouve en solution solide dans l'austénite, c'est-à-dire sous une forme plus apte au phénomène de décarburation qui va intervenir. L'injection est menée préférentiellement à une température T1a inférieure ou égale à Ac1+40°C. Cette gamme de température supérieure à Ac1 sera préférée pour obtenir une profondeur de décarburation $p_{50\%}$ plus importante, par exemple supérieure à 9 ou 12 micromètres. Au-delà de Ac1+40°C, il existe un risque de faire croître la taille de grain austénitique et de provoquer la formation de composés bainitiques et/ou martensitiques dans le substrat d'acier lors du refroidissement qui suit le recuit.

L'injection est réalisée de façon à ce que le point de rosée PR de l'atmosphère A2a de cette section du four se situe entre -15°C et la température Te du point de rosée de l'équilibre thermodynamique Fer/oxyde de fer. Dans la gamme de température considérée, l'oxyde de fer formé peut être FeO ou Fe3O4. On choisira la température d'équilibre Te la plus basse correspondant à la formation de l'un ou l'autre oxyde. Cette température Te peut être déterminée par exemple à partir de la publication : JANAF Thermomechanical Tables, 3rd Edition, Part II, Journal of Physical and Chemical Reference Data, Volume 14, 1985, supplément n°1, publié par l'American Chemical Society and the American Institute of Physics for the National Bureau of Standards. Dans ces conditions d'injection, on crée une oxydation sélective interne de certains éléments d'addition présents dans l'acier (Mn, Si, Al, Cr, Ti) sans qu'une oxydation superficielle du fer n'intervienne. L'oxydation interne peut avoir une profondeur allant jusqu'à 5 micromètres environ sous la surface pour le Mn, Si, Al et le Cr. On assiste à un enrichissement en oxygène dans cette zone superficielle, dont la teneur moyenne en oxygène est désignée par $O_m$. Si la teneur nominale en oxygène du substrat d'acier est désignée par $O_0$, le rapport $O_m/O_0$ qui caractérise l'enrichissement superficiel en oxygène est supérieur à 15.

Les oxydes sont situés entre 0 et 5 micromètres sous l'interface entre le pré-revêtement et le substrat. Pour un point de rosée PR supérieur à -15°C, la densité des oxydes de diamètre supérieur à 1 micromètre dans cette zone est supérieure à 50/mm². La définition du diamètre est la suivante : à partir d'une coupe métallographique, on détermine pour chaque oxyde le diamètre du cercle qui présenterait la même surface. On sait que les oxydes ont généralement une influence défavorable sur la ductilité, en raison de leur rôle de sites d'amorçage de la rupture. Comme on le verra plus loin, la nature spécifique des oxydes internes formés dans les conditions citées ne joue pas de rôle néfaste sur l'aptitude au pliage après durcissement sous presse.

Une décarburation superficielle se produit dans ces conditions. Lorsque le point de rosée est supérieur à la température Te du point de rosée correspondant à l'équilibre Fer/oxyde de fer, l'atmosphère devient oxydante pour le fer. Lors des étapes ultérieures de recuit, il existe alors un risque éventuel de ne pas réduire complètement l'oxyde de fer et de causer l'apparition locale de défauts de revêtement correspondant à la présence locale d'oxydes superficiels non réduits. La température Te est fonction de la température et de la teneur en hydrogène de l'atmosphère. A titre indicatif, pour une atmosphère contenant 97,5% d'azote et 2,5% d'hydrogène, Te=+9°C à 800°C. Pour une atmosphère contenant 95% d'azote et 5% d'hydrogène, Te=+18°C à 800°C. La tôle sort ensuite de la section dans laquelle on a réalisé l'injection, à une température T2a comprise entre 720 et 860°C pour entrer dans une zone de maintien à une température Tm comprise entre T2a et T2a+40°C. L'intervalle de temps entre l'instant où la tôle est à la température T1a et l'instant où celle-ci atteint la température T2a, doit être au moins de 30 secondes afin d'obtenir une profondeur de décarburation $p_{50\%}$ comprise entre 6 et 30 micromètres.

Optionnellement, l'atmosphère dans le début de la zone de maintien peut être identique à celle de la zone précédente, c'est-à-dire avoir un point de rosée compris entre -15 et Te. On peut ensuite soit refroidir la tôle, soit maintenir celle-ci à la température Tm sous une atmosphère A3 contenant de 2 à 15% en volume d'hydrogène, préférentiellement 3-5% en volume d'hydrogène, le solde étant de l'azote et des impuretés inévitables dans le gaz, avec un point de rosée compris entre -60 et -15°C, ces conditions étant réductrices pour le fer. L'étape de refroidissement qui suit sera décrite ci-dessous.

Selon un second mode, on débute le procédé de fabrication de manière identique à celle qui vient d'être décrite jusqu'à l'étape d'injection à la température T1a comprise entre 600°C et Ac1+40°C, préférentiellement supérieure à Ac1. A cette température, on injecte une quantité d'eau, de vapeur ou d'oxygène de manière à obtenir dans cette zone du four une atmosphère désignée par A2b, oxydante pour le fer. Ces conditions provoquent une oxydation totale de la surface, c'est-à-dire du fer et de certains éléments d'addition (Mn, Si, Al, Cr, Ti) Sous cette couche d'oxyde, se forment des oxydes internes de Mn, Si, Al, Cr, ou Ti, un enrichissement en oxygène intervient. Une décarburation superficielle intervient en même temps que l'oxydation du fer. La tôle sort ensuite de la section d'injection à une température T2a comprise entre 720 et 860°C pour entrer dans une zone de maintien à une température de maintien Tm comprise entre T2a et T2a+40°C. L'intervalle de temps entre l'instant où la tôle est à la température T1a et l'instant où celle-ci atteint la température T2a, doit être au moins de 30 secondes afin d'obtenir une profondeur de décarburation $p_{50\%}$ comprise entre 6 et 30 micromètres. Au-delà, dans la zone de maintien, la tôle est maintenue à la température Tm dans une atmosphère A3 réductrice pour le fer, les conditions étant choisies de telle sorte que la réduction complète de la couche d'oxyde de fer intervienne au plus tard à la fin du maintien à la température Tm. On peut choisir par exemple à cet effet une atmosphère contenant de 2 à 15% en volume d'hydrogène, préférentiellement 3-5% en volume d'hydrogène, le solde étant de l'azote et des impuretés inévitables dans le gaz avec un point de rosée compris entre -60 et -15°C, pendant une durée suffisamment longue pour qu'une réduction complète de la couche superficielle d'oxyde de fer intervienne dans cette zone. Après réduction de cette couche d'oxyde de fer, la tôle contient des oxydes de Mn, Si, Al ou Cr situés entre 0 et 5 micromètres sous la surface, la densité des oxydes de diamètre supérieur à 1 micromètre dans cette zone, étant supérieure à 50/mm². L'enrichissement local en oxygène est tel que le rapport $O_m/O_0$ est supérieur à 15.

L'étape de refroidissement qui suit sera décrite ci-dessous.

Selon un troisième mode, le cycle thermique de recuit de la tôle combine différents moyens de chauffage ; l'étape de préchauffage est réalisée dans une zone d'un four chauffé à flammes directes (ou « DFF » : « direct flame fumace »): la tôle est préchauffée au défilé jusqu'à une température T1b comprise entre 550 et 750°C dans une zone où l'atmosphère résulte de la combustion d'un mélange d'air et de gaz naturel. Selon ce mode, le rapport air/gaz est compris entre 1 et 1,2, étant entendu que la combustion air-gaz dans un rapport stoechiométrique est de 1. Ces conditions de préchauffage conduisent à la formation d'une couche superficielle d'oxyde de fer dont l'épaisseur est comprise entre 0,10 et 0,25 micromètres. Sous cette couche d'oxyde, se forment des oxydes Internes de Mn, Si, Al, Cr, ou Ti, un enrichissement en oxygène intervient. A la sortie de cette zone de préchauffage par four DFF, la tôle pénètre dans une seconde zone de four chauffée par tubes radiants (RTF) ou par résistances, ou par induction, ou par une combinaison quelconque de ces différents moyens. L'atmosphère contient de 3 à 40% en volume d'hydrogène, le solde étant de l'azote et des impuretés inévitables, le point de rosée inférieur à -30°C. Dans cette seconde zone, la tôle est chauffée jusqu'à une température T2b comprise entre 760 et 830°C. Préférentiellement, T2b est supérieure à Ac1, ce qui permet une décarburation plus rapide en raison de la présence du carbone en solution solide dans l'austénite. L'intervalle de temps entre l'instant où la tôle est à la température T1b et l'instant où celle-ci atteint la température T2b, doit être au moins de 30 secondes afin d'obtenir une profondeur de décarburation $p_{50\%}$ comprise entre 6 et 30 micromètres. Ces conditions conduisent à une réduction totale de la couche superficielle d'oxyde de fer créée à l'étape précédente, et à la décarburation superficielle visée. Après réduction de la couche d'oxyde de fer, la tôle contient des oxydes de Mn, Si, Al ou Cr situés entre 0 et 5 micromètres sous la surface, la densité des oxydes de diamètre supérieur à 1 micromètre dans cette zone, étant supérieure à 50/mm². L'enrichissement local en oxygène est tel que le rapport $O_m/O_0$ est supérieur à 15.

- La tôle au défilé entre ensuite dans une zone de maintien à une température de maintien Tm comprise entre T2b et T2b+40°C.

La suite du procédé est identique dans les trois modes décrits ci-dessus : la tôle est refroidie jusqu'à une température T3 dans une atmosphère A4 telle qu'aucune réoxydation superficielle du fer n'intervienne. On peut utiliser par exemple une atmosphère contenant de 2 à 70% en volume d'hydrogène, le solde étant de l'azote et des impuretés inévitables dans le gaz, avec un point de rosée compris entre -60 et -30°C. La tôle qui pénètre ultérieurement dans le bain de pré-revêtement est donc totalement exempte d'oxyde de fer superficiel. La température T3 est voisine de celle de Tbm, température du bain de pré-revêtement, afin d'éviter une perturbation thermique du bain. Pour cette raison, la température T3 sera comprise entre Tbm-10°C et Tbm+50°C. Ainsi, pour un pré-revêtement de zinc, la température T3 sera comprise entre 450 et 510°C. Pour un pré-revêtement dans un bain dit d'aluminium-silicium, la température T3 sera comprise entre 660 et 720°C. Le pré-revêtement peut être de l'aluminium ou un alliage à base d'aluminium. Dans ce dernier cas, le pré-revêtement, fabriqué préférentiellement par trempé en continu, est avantageusement un alliage aluminium-silicium comprenant en poids 7-15% de silicium, 3 à 20% de fer, optionnellement entre 15 et 30 ppm de calcium, le reste étant de l'aluminium et des impuretés inévitables résultant de l'élaboration.

Le pré-revêtement peut être également du zinc ou un alliage de zinc. Celui-ci peut être notamment du type galvanisé au trempé en continu («GI»), contenant 0,25-0,70%Al, 0,01-0,1%Fe, le solde étant du zinc et des Impuretés inévitables résultant de l'élaboration. Le pré-revêtement peut être également galvanisé-allié (« GA ») contenant 0,15-0,4%Al, 6-15%Fe, le solde étant du zinc et des impuretés inévitables résultant de l'élaboration. Le pré-revêtement peut être également un alliage de zinc-aluminium-magnésium contenant 1-15%Al, 0,5-5%Mg, 0,01-0,1%Fe, le solde étant du zinc et des impuretés inévitables résultant de l'élaboration. Ce pré-revêtement peut être encore un alliage contenant 4-6%Al, 0,01-0,1%Fe, le solde étant du zinc et des impuretés inévitables résultant de l'élaboration.

Le pré-revêtement peut être également un alliage aluminium-zinc, contenant 40-45%Zn, 3-10%Fe, 1-3%Si, le solde étant de l'aluminium et des impuretés inévitables résultant de l'élaboration.

Le pré-revêtement peut être également composé d'une superposition de couches : par exemple, après dépôt au trempé d'une couche d'aluminium ou d'alliage d'aluminium, on peut effectuer un ou plusieurs dépôts ultérieurs de zinc ou d'alliage de zinc, par exemple par électrodéposition ou par dépôt sous vide : PVD (Physical Vapor Deposition) et/ou CVD (Chemical Vapor Deposition), ces procédés de dépôt étant connus en eux-mêmes.

A ce stade, on obtient grâce aux procédés décrits ci-dessus, une tôle composée d'un substrat d'acier dont la profondeur de décarburation $p_{50\%}$ est comprise entre 6 et 30 micromètres surmontée d'un pré-revêtement, sans couche d'oxyde de fer présente entre le substrat et le pré-revêtement. La figure 1 présente un exemple de telle tôle, où le substrat d'acier 1 comporte une zone décarburée superficielle spécifique 2 surmontée d'un pré-revêtement 1 zingué galvanisé-allié.

Cette tôle est ensuite découpée pour obtenir un flan dont la géométrie est en rapport avec la géométrie finale de la pièce visée. Optionnellement, il est possible d'emboutir à froid celui-ci de façon à se rapprocher à un degré plus ou moins grand de la géométrie finale de la pièce visée. Dans le cas d'une faible déformation à froid, celle-ci pourra être complétée par une déformation effectuée à chaud, comme il sera exposé plus loin.

On chauffe ce flan plan ou pré-embouti, à une température $T_R$ propre à conférer une structure partiellement ou totalement austénitique au substrat d'acier. $T_R$ peut être comprise entre $A_{c1}$ (température de début de transformation austénitique de l'acier au chauffage) et $A_{c3}$ (température de fin de transformation austénitique) en particulier lorsque l'on cherche à obtenir des microstructures bainito-martensitiques après refroidissement à la presse. La température $T_R$ sera supérieure à $A_{c3}$ si l'on vise plutôt une microstructure majoritairement martensitique dans la pièce finale. Le chauffage des flans est effectué préférentiellement dans un four sous atmosphère ordinaire ; on assiste durant cette étape à une alliation entre l'acier du substrat et le pré-revêtement. On désigne par le terme de « pré-revêtement » l'alliage avant chauffage, et par « revêtement » la couche alliée formée lors du chauffage qui précède Immédiatement l'emboutissage à chaud. Le traitement thermique en four modifie donc la nature du pré-revêtement et sa géométrie puisque l'épaisseur du revêtement final est supérieure à celle du pré-revêtement. Le revêtement formé par alliation protège l'acier sous-jacent de l'oxydation et d'une décarburation supplémentaire et se révèle apte à une déformation ultérieure à chaud notamment dans une presse d'emboutissage. L'alliation intervient sur la totalité de l'épaisseur du revêtement. En fonction de la composition du pré-revêtement, on forme une ou plusieurs phases intermétalliques dans cette couche alliée et/ou un alliage sous forme de solution solide. L'enrichissement en fer du revêtement conduit à une élévation rapide de son point de fusion. Les revêtements formés présentent également l'avantage d'être adhérents et d'être adaptés aux opérations éventuelles de mise en forme à chaud et de refroidissement rapide qui vont suivre.

On maintient le flan à la température $T_R$ pour assurer l'homogénéité de la température en son sein. Selon l'épaisseur du flan, comprise par exemple entre 0,5 à 2,6 mm, la durée de maintien à la température $T_1$ peut varier de 30 secondes à 15 minutes.

On extrait ensuite du four le flan chauffé et on le transfère au sein d'un outillage, ce transfert étant effectué rapidement de façon à ne pas provoquer de transformation de l'austénite au refroidissement. Selon une variante, le flan est chauffé au voisinage de l'outillage puis déformé à chaud sans transfert. On effectue ensuite un emboutissage à chaud du flan de façon à obtenir la géométrie finale de la pièce. D'autres modes de déformation à chaud sont également possibles, par exemple un formage entre galets désigné usuellement sous le nom de« roll forming ». Dans le cas où le flan a déjà été embouti à froid préalablement, l'étape qui suit l'extraction du flan hors du four peut être simplement une conformation au sein d'un l'outillage de presse. Dans ce cas, la conformation est caractérisée par un effort appliqué plus faible de l'outillage sur la pièce et vise à parachever la géométrie finale de la pièce et à éviter ses déformations éventuelles au refroidissement. D'une manière optionnelle, il est également possible de ne chauffer qu'une partie du flan, ou de refroidir la pièce emboutie de façon différente dans ses différentes zones, ces variantes conduisant à l'obtention de pièces durcies de façon non uniforme, certaines zones étant durcies de façon importante, d'autres zones présentant une résistance mécanique moindre mais une ductilité supérieure.

Après l'étape d'emboutissage ou de conformation, la pièce est maintenue dans l'outillage éventuellement refroidi, de façon à assurer son refroidissement efficace par conduction thermique.

Selon la vitesse de refroidissement et la trempabilité de l'acier du substrat, la microstructure finale est martensitique ou bainito-martensitique.

A titre d'exemple non limitatif, les résultats suivants vont montrer les caractéristiques avantageuses conférées par l'invention.

Exemple 1 :

On a approvisionné une tôle d'acier laminée à froid de 1,2mm d'épaisseur dont la composition exprimée en teneur pondérale (%) est la suivante, le reste étant du fer et des impuretés inévitables résultant de l'élaboration :

| C | Mn | Si | Cr | Ti | Al | S | P | B | O |
|---|---|---|---|---|---|---|---|---|---|
| 0,22 | 1,17 | 0,24 | 0,18 | 0,040 | 0,032 | 0,003 | 0,013 | 0,003 | 0,0014 |

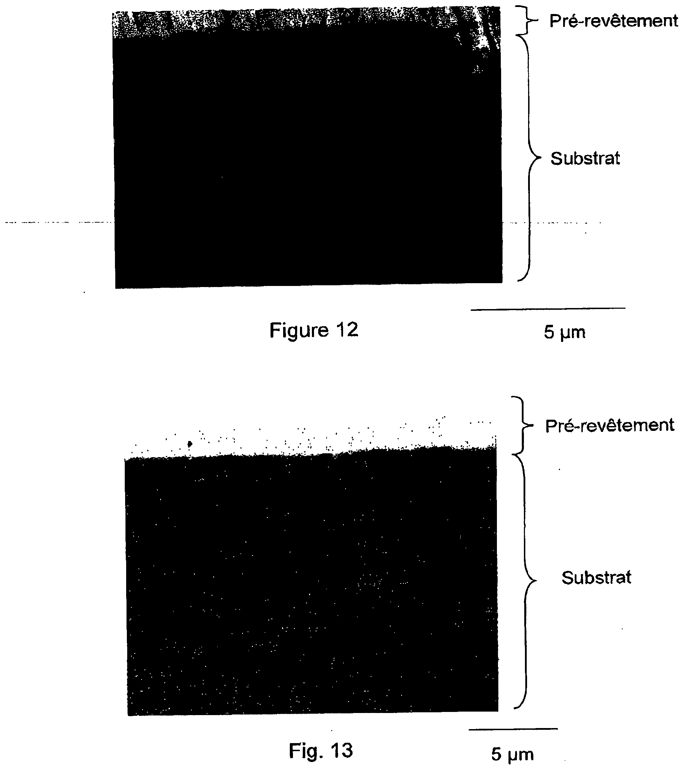

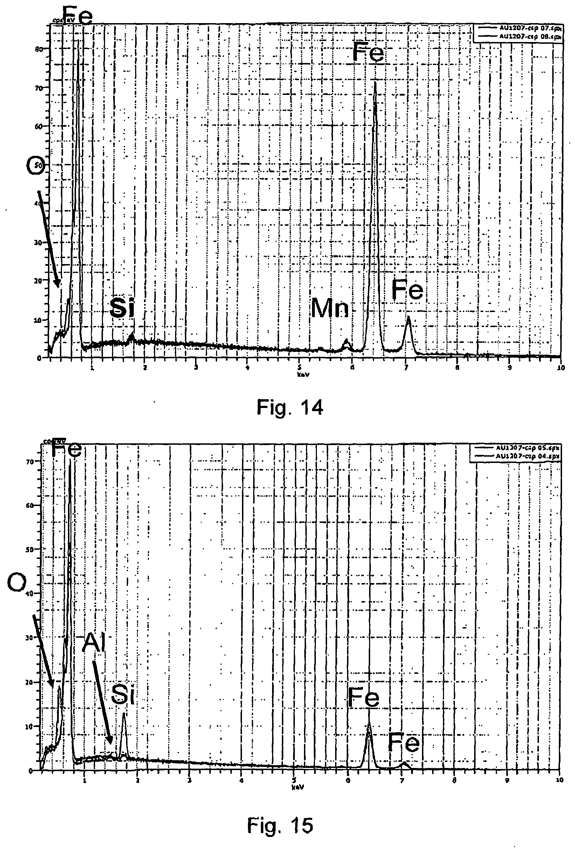

La température Ac1 de cette composition d'acier est de 724°C. La tôle a été préchauffée au défilé dans un four à tube radiant sous une atmosphère A1 d'azote contenant 4,7% en volume d'hydrogène avec un point de rosée de -31°C, jusqu'à une température T1a de 600°C à partir de laquelle une injection d'eau est effectuée de façon à d'obtenir une atmosphère A2a avec un point de rosée PR. Différents essais ont été menés en modifiant le débit d'eau injectée dans le four, de manière à faire varier le point de rosée PR entre - 27°C (obtenu grâce à une quantité d'eau injectée relativement peu importante) et +2°C. Dans tous les essais, la tôle a été ensuite chauffée depuis la température T1a jusqu'à la température T2a égale à 780°C dans l'atmosphère A2a pendant une durée de 110 s., ce qui conduit à obtenir une décarburation et une oxydation sélective interne du Mn, Si, Al, Cr et Ti, ces oxydes étant formés au voisinage immédiat de la surface de la tôle. A la température T2a, le point de rosée de l'équilibre Fer/oxyde de fer, est de +17°C. La tôle pénètre ensuite dans une zone du four où elle est maintenue à la température Tm de 780°C sous une atmosphère A3 contenant de l'azote et 7% d'hydrogène, réductrice pour le fer. La tôle est ensuite refroidie au défilé dans une autre zone du four sous une atmosphère A4 contenant 10% d'hydrogène, jusqu'à une température T3 de 470°C et prérevêtue au trempé dans un bain à la température Tm de 462°C contenant du zinc et 0,125% d'aluminium ainsi que des impuretés inévitables. Aucune réoxydation superficielle du fer n'intervient dans les étapes de maintien et de refroidissement dans l'atmosphère A4. Immédiatement après pré-revêtement, la tôle est réchauffée jusqu'à une température de 540°C pour obtenir un pré-revêtement galvanisé-allié (« GA »), c'est-à-dire contenant 9% de fer. On obtient ainsi une tôle qui ne contient pas de couche d'oxyde de fer entre le substrat d'acier et ledit pré-revêtement galvanisé-allié. La figure 12 illustre des observations réalisées dans les conditions de l'invention, d'oxydes formés lors de l'oxydation interne sélective, visibles dans le substrat d'acier immédiatement sous le pré-revêtement. Ces oxydes peuvent être isolés ou alignés selon les joints de grains. Grâce à une analyse de la dispersion d'énergie du rayonnement X de ces oxydes (« EDS »), on montre que ceux-ci sont des oxydes de manganèse, silicium, et aluminium comme l'illustrent les figures 14 et 15 mettant en évidence les pics caractéristiques correspondant à ces éléments. Le pic du fer est dû à la matrice environnant les oxydes.

La figure 13 illustre la présence d'oxydes de diamètre supérieur à 1 micromètre, dont la densité est supérieure à 50/mm$^2$ dans la zone située entre 0 et 5 micromètres sous la surface de la tôle d'acier.

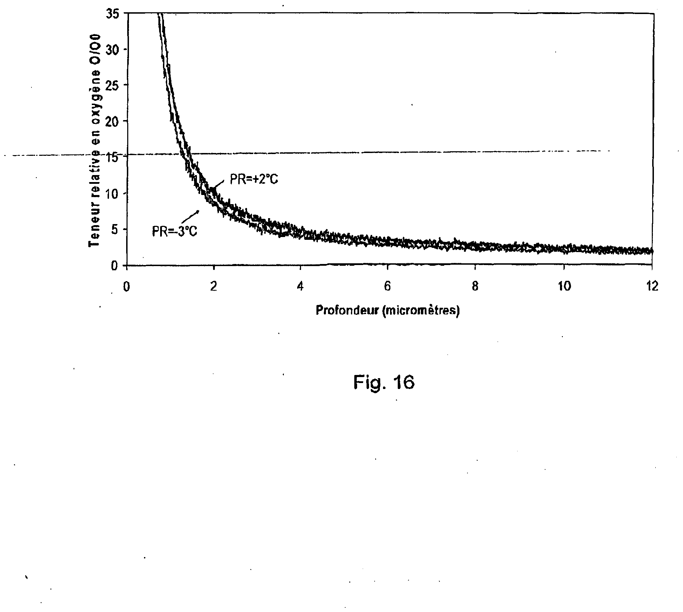

La figure 16 illustre la variation de la teneur en oxygène relative (O/ $O_0$) sous le pré-revêtement dans le substrat, mesurée par Spectrométrie à Décharge luminescente, $O_0$ désignant la teneur en oxygène nominale du substrat. Cette variation a été mesurée pour des valeurs du point de rosée PR de -3°C et de +2°C. La profondeur p=0 correspond à l'interface entre le substrat et le pré-revêtement. Dans une zone située entre 0 et 5 micromètres sous la surface du substrat, on note une augmentation de la teneur en oxygène correspondant à la présence des oxydes mentionnés ci-dessus. L'enrichissement local en oxygène dans cette zone est tel que le rapport $O_m/O_0$ est supérieur à 15 : il est égal à 15,1 pour PR=-3°C et à 17,4 pour PR=+2°C.

Les tôles pré-revêtues sont ensuite découpées pour obtenir des flans propres à l'emboutissage. Ceux-ci ont été chauffés jusqu'à une température de 880°C dans un four sous atmosphère ordinaire. Après séjour total de 5 minutes dans le four (dont une durée de 4 minutes pour la phase de chauffage), les flans ont été extraits et emboutis immédiatement. Après emboutissage à chaud, les pièces ont été refroidies sous presse à une vitesse supérieure à 30°C/s de façon à obtenir une structure totalement martensitique dans le substrat d'acier. La résistance à la rupture en traction Rm obtenue sur les pièces durcies est typiquement de l'ordre de 1500 MPa.

L'angle de pliage critique $\alpha_c$ de ces pièces a été mesuré par essai de flexion trois points effectué avec deux rouleaux extérieurs de 30 mm de diamètre et un couteau central de très faible rayon.

La figure 6 présente la variation de l'angle critique $\alpha_c$ en fonction du point de rosée PR après injection d'eau à partir de la température T1a : lorsque PR est inférieur à -15°C, l'angle de pliage obtenu présente une valeur inférieure à 55°, non satisfaisante. Lorsque PR excède la température Te de +17°C, il existe un risque éventuel de ne pas réduire complètement l'oxyde de fer lors du maintien ultérieur, causant ainsi l'apparition locale de défauts de revêtement correspondant à la présence locale d'oxydes superficiels non réduits. Dans le domaine de l'invention, l'angle de pliage varie peu en fonction du point de rosée : entre -15 et -7°C, l'augmentation est de 0,79° par °C en moyenne alors que la variation est plus importante au dessous de - 15°C (1,05° par °C) Lorsque PR est compris entre -15 et -10°C, on met en évidence un domaine particulièrement intéressant puisque l'angle de pliage est pratiquement indépendant du point de rosée. En d'autres termes, dans cette gamme particulière, une fluctuation éventuelle non désirée de la quantité d'eau injectée lors du recuit en four, n'a pas de conséquence sur l'aptitude au pliage après emboutissage à chaud, ce qui permet de garantir une grande stabilité des caractéristiques sur les pièces embouties et durcies à la presse. On observera également que cette bonne aptitude au pliage est obtenue en dépit de la présence des oxydes formés sous le pré-revêtement. Sans être lié par une théorie, on pense que l'amorçage de l'endommagement à partir de ces oxydes a tendance à être retardé par la ténacité intrinsèque de la zone à teneur en carbone réduite dans laquelle ils se trouvent.

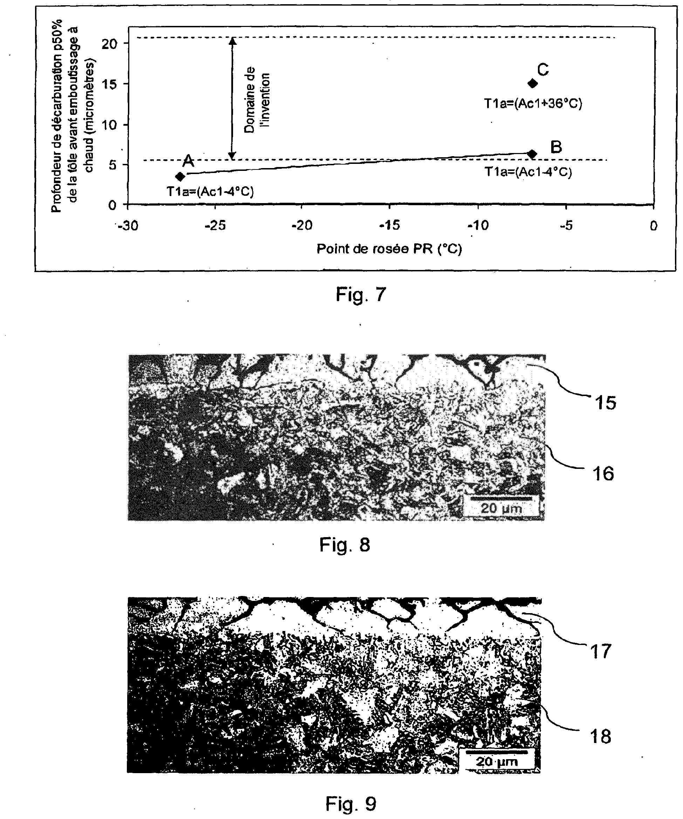

On a réalisé par ailleurs des essais en faisant varier simultanément PR et la température T1a, cette dernière étant de 720°C (soit Ac1-4°C) ou de 760°C (Ac1+36°C) La figure 7 illustre l'influence de la température T1a et du point de rosée PR sur la profondeur de décarburation $p_{50\%}$ avant emboutissage à chaud, mesurée par spectroscopie à décharge luminescente : lorsque le point de rosée est trop bas, la profondeur décarburée n'atteint pas la valeur requise par l'invention (résultat repéré « A » sur la figure 7). Un point de rosée suffisamment élevé, avec une température T1a légèrement inférieure à Ac1 permet d'atteindre la profondeur requise (résultat « B ») Un chauffage à une température T1a plus élevée (Ac1+36°C) permet d'augmenter notablement la profondeur de décarburation $p_{50\%}$ (résultat « C»)

Après polissage et attaque au réactif Nital des pièces embouties à chaud obtenues, on a observé par microscopie optique la microstructure sous le revêtement qui résulte de l'alliation par diffusion entre le zinc du pré-revêtement initial et l'acier du substrat : la figure 8 illustre ainsi le revêtement 15 et l'acier sous-jacent 16, pour un recuit avec un point de rosée PR=-27°C. la figure 9 illustre le revêtement 17 et l'acier sous-jacent 18, pour un recuit avec un point de rosée PR=-7°C. En dépit de la différence importante d'aptitude au pliage entre les deux échantillons (20°), on ne met pas en évidence de différences microstructurales significatives entre les deux échantillons après emboutissage à chaud, malgré la différence de décarburation existant entre ceux-ci avant emboutissage à chaud :

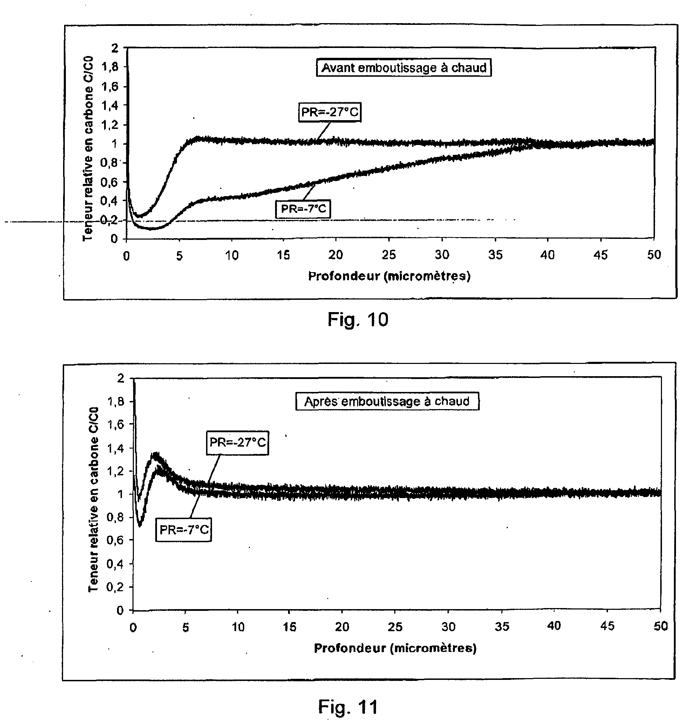

La figure 10 illustre la variation, avant emboutissage à chaud, de la teneur en carbone des deux tôles recuites dans une atmosphère A2a avec un point de rosée PR de -27°C ou de -7°C. Cette variation, mesurée par spectrométrie de décharge luminescente dans le substrat d'acier, est exprimée à la figure 10 en fonction de la profondeur sous l'interface entre l'acier et le pré-revêtement. La teneur locale mesurée (C) a été rapportée à la teneur nominale en carbone $C_0$ de façon à obtenir la variation de la teneur en carbone relative $C/C_0$. On observe que les zones décarburées sont très différentes dans les deux conditions de recuit, la profondeur de décarburation $p_{50\%}$ étant de 15 micromètres pour PR=-7°C et de 3 micromètres pour PR=-27°C. Si l'on considère la totalité de la zone décarburée, la profondeur de décarburation mesurée après recuit avec PR=-7°C est supérieure d'environ 35 micromètres à celle mesurée après recuit sous PR=-27°C.

Après emboutissage à chaud de ces tôles, on a déterminé par la même méthode la variation de la teneur en carbone sous le revêtement des pièces ainsi obtenues. La figure 11 illustre la variation de la teneur en carbone relative $C/C_0$ de ces pièces. On met alors en évidence que la zone décarburée est sensiblement identique dans les deux conditions de recuit. Ceci indique que le chauffage en four préalable au traitement de durcissement par trempe sous presse, conduit à une diffusion du carbone vers la surface décarburée de l'acier. La détermination de la décarburation après emboutissage à chaud ne permet pas de déterminer que le recuit avec PR=-7°C conduira à des résultats de pliage satisfaisants alors que le recuit avec PR=-27°C ne satisfera pas le niveau requis. Bien qu'incomplète, cette homogénéisation du carbone permet cependant d'obtenir dans l'acier situé immédiatement sous le revêtement, une teneur suffisante en carbone pour provoquer une trempe martensitique dans les conditions de refroidissement liées à l'emboutissage à chaud, comme illustré aux figures 8 et 9. Cependant, les caractéristiques intrinsèques de ténacité de la martensite créée dans ces conditions, dépendent des conditions de décarburation qui résultent notamment du choix de la température PR. Ainsi, le contrôle efficace de l'aptitude au pliage des pièces embouties à chaud doit être réalisé sur les tôles ou les flans avant l'opération d'emboutissage à chaud, et non après cette dernière, contrairement à ce qui était attendu par l'homme du métier. En outre, les pièces embouties à chaud fabriquées à partir de tôles prérevêtues de zinc ou d'alliage de zinc décarburées selon l'invention, présentent une aptitude particulière au soudage par résistance par point : en effet, après chauffage puis emboutissage à chaud, on constate la présence d'une couche décarburée sous le revêtement. On sait que le soudage par résistance conduit à une élévation de température locale très importante puisque la fusion est atteinte au sein du noyau fondu qui constitue la liaison entre les éléments soudés. Dans les joints soudés effectués sur des pièces embouties à chaud conventionnelles, on peut assister à une fragilisation des joints de grains austénitiques par pénétration du zinc du revêtement, alors liquide en raison de l'élévation de température lors du soudage. Selon l'invention, la présence d'une zone très appauvrie en carbone sous le revêtement conduit à une augmentation locale de la température de transformation Ac3 en austénite lors du chauffage. Selon la teneur en carbone, la structure à haute température est alors constituée de microstructure de ferrite ou d'un mélange de ferrite et d'austénite. En présence de zinc liquide, cette microstructure présente une moindre sensibilité à la fissuration que la structure austénitique.

Exemple 2 :

On a fabriqué des tôles pré-revêtues de Zn par la méthode décrite ci-dessus, à l'exception du fait que celles-ci ont une épaisseur de 1,8 mm et n'ont pas été réchauffées à 540°C après revêtement au trempé, de telle sorte que leur revêtement est galvanisé et non galvanisé-allié.

Les conditions de fabrication ont été choisies de manière à obtenir une tôle avec une profondeur décarburée $p_{50\%}$ de 6 micromètres. Ces tôles ont été découpées pour obtenir des flans qui ont été austénitisés à une température de 880°C dans un four sous atmosphère ordinaire. Après un séjour total allant jusqu'à 10 minutes dans le four, les flans ont été extraits, emboutis immédiatement à chaud et durcis sous presse. Le tableau suivant indique la variation de l'angle de pliage critique $\alpha_c$ en fonction de la durée de séjour total de la pièce dans le four.

| durée de séjour (minutes) | Angle de pliage $\alpha_c$ (°) |
|---|---|
| 5,5 | 57,5 |
| 7 | 55 |
| 10 | 54 |

Il apparaît ainsi que les flans peuvent séjourner jusqu'à 7 minutes dans le four avant d'être embouti à chaud, tout en satisfaisant aux exigences requises. Ceci permet de résoudre les problèmes rencontrés sur les lignes d'emboutissage à chaud, lorsqu'un incident sur la ligne contraint à faire séjourner les flans dans le four plus longtemps que prévu. L'invention permet cette souplesse, en évitant de rebuter des flans. De plus; on observera qu'au-delà de 7 minutes, l'augmentation de durée de séjour ne conduit qu'à une très faible décroissance de l'angle de pliage, ce qui indique que le procédé selon l'invention présente de grandes garanties de sécurité en cas de dérive par rapport aux paramètres nominaux de traitement thermique lors de l'emboutissage à chaud, et permet d'obtenir une grande reproductibilité des caractéristiques mécaniques des pièces.

Ainsi, ces procédés permettent la fabrication de tôles prérevêtues selon l'invention, et de pièces revêtues à très hautes caractéristiques de résistance et d'aptitude au pliage, avec une bonne isotropie, dans des conditions économiques très satisfaisantes. Ces pièces seront utilisées avec profit comme pièces de structure ou de renfort dans le domaine de la construction automobile.

## Revendications

1. Tôle laminée à froid et recuite pré-revêtue pour la fabrication de pièces durcies par trempe sous presse, composée d'un substrat d'acier pour traitement thermique contenant une teneur en carbone $C_0$ comprise entre 0,07% et 0,5%, ladite teneur étant exprimée en poids, et d'un pré-revêtement métallique au moins sur les deux faces principales dudit substrat d'acier, ledit pré-revêtement métallique étant de l'aluminium ou un alliage d'aluminium, ou du zinc ou un alliage de zinc, ou est composée d'une couche d'aluminium ou d'un alliage d'aluminium, surmontée d'une couche de zinc ou d'un alliage de zinc, la composition dudit substrat d'acier comprenant, les teneurs étant exprimées en poids :

$$0,07\% \leq C \leq 0,5\%$$

$$0,5\% \leq Mn \leq 3\%$$

$$0,02\% \leq Si \leq 0,5\%$$

$$0,01\% \leq Cr \leq 1\%$$

$$Ti \leq 0,2\%$$

$$Al \leq 0,25\%$$

$$S \leq 0,05\%$$

$$P \leq 0,1\%$$

$$0,0005\% \leq B \leq 0,010\%,$$

optionnellement

$$0,0005\% \leq Ca \leq 0,005\%,$$

le reste de la composition étant constitué de fer et d'impuretés inévitables résultant de l'élaboration, **caractérisée en ce que** ledit substrat comporte une zone décarburée à la surface de chacune desdites deux faces principales, la profondeur $p_{50\%}$ de ladite zone décarburée étant comprise entre 6 et 30 micromètres, $p_{50\%}$ étant la profondeur à laquelle la teneur en carbone est égale à 50% de ladite teneur $C_0$, la profondeur $p_{50\%}$ étant mesurée par spectroscopie de décharge luminescente, et **en ce que** ladite tôle ne contient pas de couche d'oxyde de fer entre ledit substrat et ledit pré-revêtement métallique,

**2.** - Tôle pré-revêtue selon la revendication 1, **caractérisée en ce que** la composition dudit substrat d'acier comprend, les teneurs étant exprimées en poids :

$$0,09\% \leq C \leq 0,38\%$$

$$0,8\% \leq Mn \leq 1,5\%$$

$$0,1\% \leq Si \leq 0,35\%$$

$$0,01\% \leq Cr \leq 0,3\%$$

$$0,02\% \leq Ti \leq 0,1\%'$$

$$0,001 \leq Al \leq 0,25\%$$

$$S \leq 0,05\%$$

$$P \leq 0,1\%$$

$$0,002\% \leq B \leq 0,005\%,$$

optionnellement

$$0,0005\% \leq Ca \leq 0,005\%,$$

le reste de la composition étant constitué de fer et d'impuretés inévitables résultant de l'élaboration.

**3.** - Tôle pré-revêtue selon l'une quelconque des revendications 1 ou 2, **caractérisée en ce que** la composition dudit substrat d'acier comprend, la teneur étant exprimée en poids :

$$0,15\% \leq C \leq 0,25\%$$

**4.** - Tôle pré-revêtue selon l'une quelconque des revendications 1 ou 2, **caractérisée en ce que** la composition dudit substrat d'acier comprend, les teneurs étant exprimées en poids :

$$0,20\% \leq C \leq 0,25\%$$

$$1,1\% \leq Mn \leq 1,35\%$$

$$0,15\% \leq Si \leq 0,35\%$$

$$0,02\% \leq Al \leq 0,06\%$$

$$0,02\% \leq Ti \leq 0,05\%$$

$$0,02\% \leq Cr \leq 0,25\%$$

$$0,002\% \leq B \leq 0,004\%,$$

le reste de la composition étant constitué de fer et d'impuretés inévitables résultant de l'élaboration.

**5.** - Tôle pré-revêtue selon l'une quelconque des revendications 1 à 4, **caractérisée en ce que** ledit substrat d'acier a une teneur en oxygène $O_0$ et a, sous l'interface entre le pré-revêtement et ledit substrat, sur une profondeur située entre 0 et 5 micromètres à partir dudit interface, une teneur moyenne en oxygène $O_m$, $O_m/O_0$ étant supérieur à 15.

**6.** - Tôle pré-revêtue selon l'une quelconque des revendications 1 à 5, **caractérisée en ce que** ledit substrat contient, dans une zone située entre 0 et 5 micromètres sous l'interface entre ledit pré-revêtement et ledit substrat, des oxydes comprenant au moins un élément sélectionné dans un groupe constitué par le titane, le silicium, le manganèse, l'aluminium, le chrome, la densité desdits oxydes de diamètre supérieur à 1 micromètre dans cette zone, étant supérieure à 50/mm$^2$.

**7.** - Tôle pré-revêtue selon l'une quelconque des revendications 1 à 6, **caractérisée en ce que** la profondeur $p_{50\%}$ de ladite zone décarburée est comprise entre 9 et 30 micromètres.

**8.** - Tôle pré-revêtue selon la revendication 7, **caractérisée en ce que** la profondeur $p_{50\%}$ de ladite zone décarburée est comprise entre 12 et 30 micromètres.

**9.** - Tôle pré-revêtue selon l'une quelconque des revendications 1 à 8, **caractérisée en ce que** la tôle est d'épaisseur comprise entre 0,5 et 2,6 mm.

**Patentansprüche**

**1.** Vorbeschichtetes kaltgewalztes und geglühtes Blech für die Herstellung von pressgehärteten Teilen, bestehend aus einem Stahlsubstrat für die Wärmebehandlung mit einem Kohlenstoffgehalt Co zwischen 0,07 % und 0,5 %, wobei der Gehalt in Gewichtsprozenten ausgedrückt ist, und einer metallischen Vorbeschichtung zumindest auf den zwei Hauptflächen des Stahlsubstrats, wobei die metallische Vorbeschichtung Aluminium oder eine Aluminiumlegierung oder Zink oder eine Zinklegierung ist oder aus einer Schicht aus Aluminium oder einer Aluminiumlegierung besteht, auf der eine Schicht aus Zink oder einer Zinklegierung aufgebracht ist, die Zusammensetzung des Stahlsubstrats umfassend, wobei der Gehalt in Gewicht ausgedrückt ist:

$$0,07 \% \leq C \leq 0,5 \%$$

$$0,5\ \% \leq Mn \leq 3\ \%$$

$$0,02\ \% \leq Si \leq 0,5\ \%$$

$$0,01\ \% \leq Cr \leq 1\ \%$$

$$Ti \leq 0,2\ \%$$

$$Al \leq 0,25\ \%$$

$$S \leq 0,05\ \%$$

$$P \leq 0,1\ \%$$

$$0,0005\ \% \leq B \leq 0,010\ \%,$$

optional

$$0,0005\ \% \leq Ca \leq 0,005\ \%,$$

wobei der Rest der Zusammensetzung aus Eisen und unvermeidbaren, aus der Verarbeitung resultierenden Verunreinigungen besteht, **dadurch gekennzeichnet, dass** das Substrat einen entkohlten Bereich auf der Oberfläche jeder der zwei Hauptseiten aufweist, wobei die Tiefe $p_{50\%}$ des entkohlten Bereichs zwischen 6 und 30 Mikrometern ist, wobei $p_{50\%}$ die Tiefe ist, bei der der Kohlenstoffgehalt 50 % des Gehalts $C_0$ ist, wobei die Tiefe $p_{50\%}$ durch Glimmentladungsspektroskopie gemessen wird, und dass das Blech keine Eisenoxidschicht zwischen dem Substrat und der metallischen Vorbeschichtung enthält.

2. Vorbeschichtetes Blech nach Anspruch 1, **dadurch gekennzeichnet, dass** die Zusammensetzung des Stahlsubstrats Folgendes umfasst, wobei der Gehalt in Gewicht ausgedrückt ist:

$$0,09\ \% \leq C \leq 0,38\ \%$$

$$0,8\ \% \leq Mn \leq 1,5\ \%$$

$$0,1\ \% \leq Si \leq 0,35\ \%$$

$$0,01\ \% \leq Cr \leq 0,3\ \%$$

$$0,02\ \% \leq Ti \leq 0,1\ \%$$

$$0,001 \leq Al \leq 0,25\ \%$$

$$S \leq 0,05\ \%$$

$$P \leq 0,1\ \%$$

$$0,002\ \% \leq B \leq 0,005\ \%,$$

optional

$$0,0005\ \% \leq Ca \leq 0,005\ \%,$$

wobei der Rest der Zusammensetzung aus Eisen und unvermeidbaren Verunreinigungen besteht, die aus der Herstellung resultieren.

3. Vorbeschichtetes Blech nach einem der Ansprüche 1 oder 2, **dadurch gekennzeichnet, dass** die Zusammensetzung des Stahlsubstrats Folgendes umfasst, wobei der Gehalt in Gewicht ausgedrückt ist:

$$0,15\ \% \leq C \leq 0,25\ \%$$

4. Vorbeschichtetes Blech nach einem der Ansprüche 1 oder 2, **dadurch gekennzeichnet, dass** die Zusammensetzung des Stahlsubstrats umfasst, wobei der Gehalt in Gewicht ausgedrückt ist:

$$0,20\ \% \leq C \leq 0,25\ \%$$

$$1,1\ \% \leq Mn \leq 1,35\ \%$$

$$0,15\ \% \leq Si \leq 0,35\ \%$$

$$0,02\ \% \leq Al \leq 0,06\ \%$$

$$0,02\ \% \leq Ti \leq 0,05\ \%$$

$$0,02\ \% \leq Cr \leq 0,25\ \%$$

$$0,002\ \% \leq B \leq 0,004\ \%,$$

wobei der Rest der Zusammensetzung aus Eisen und unvermeidbaren Verunreinigungen besteht, die aus der Herstellung resultieren.

5. Vorbeschichtetes Blech nach einem der Ansprüche 1 bis 4, **dadurch gekennzeichnet, dass** das Stahlsubstrat einen Sauerstoffgehalt $O_0$ aufweist und unter der Grenzfläche zwischen der Vorbeschichtung und dem Substrat in einer Tiefe zwischen 0 und 5 Mikrometern von der Grenzfläche aus einen mittleren Sauerstoffgehalt $O_m$ aufweist, wobei $O_m/O_0$ größer ist als 15.

6. Vorbeschichtetes Blech nach einem der Ansprüche 1 bis 5, **dadurch gekennzeichnet, dass** das Substrat in einem Bereich zwischen 0 und 5 Mikrometern unter der Grenzfläche zwischen der Vorbeschichtung und dem Substrat Oxide enthält, die mindestens ein Element umfassen, das ausgewählt ist aus einer Gruppe, bestehend aus Titan, Silizium, Mangan, Aluminium und Chrom, wobei die Dichte der Oxide mit einem Durchmesser von mehr als 1 Mikrometer in diesem Bereich mehr als 50/mm$^2$ ist.

7. Vorbeschichtetes Blech nach einem der Ansprüche 1 bis 6, **dadurch gekennzeichnet, dass** die Tiefe p$_{50\%}$ des entkohlten Bereichs zwischen 9 und 30 Mikrometern ist.

8. Vorbeschichtetes Blech nach Anspruch 7, **dadurch gekennzeichnet, dass** die Tiefe p$_{50\%}$ des entkohlten Bereichs zwischen 12 und 30 Mikrometern ist.

9. Vorbeschichtetes Blech nach einem der Ansprüche 1 bis 8, **dadurch gekennzeichnet, dass** das Blech eine Stärke zwischen 0,5 und 2,6 mm aufweist.

**Claims**

1. Pre-coated, cold-rolled and annealed sheet for the fabrication of press-hardened parts, composed of a steel substrate for heat treatment with a carbon content C$_0$ between 0.07% and 0.5%, said content being expressed by weight, and a metal pre-coating at least on the two principal faces of said steel substrate, said metal pre-coating being aluminium or an aluminium alloy or zinc or a zinc alloy or is composed of a layer of aluminium or of an aluminium alloy surmounted by a layer of zinc or of a zinc alloy, the composition of said steel substrate comprising, the contents being expressed by weight:

$$0.07\% \leq C \leq 0.5\%$$

$$0.5\% \leq Mn \leq 3\%$$

$$0.02\% \leq Si \leq 0.5\%$$

$$0.01\% \leq Cr \leq 1\%$$

$$Ti \leq 0.2\%$$

$$Al \leq 0.25\%$$

$$S \leq 0.05\%$$

$$P \leq 0.1\%$$

$$0.0005\% \leq B \leq 0.010\%,$$

optionally

$$0.0005\% \leq Ca \leq 0.005\%,$$

the remainder of the composition being composed of iron and unavoidable impurities resulting from processing, **characterised in that** said substrate comprises a decarburised area on the surface of each of said two principal faces, the depth p$_{50\%}$ of the decarburised area being between 6 and 30 micrometres, p$_{50\%}$ being the depth at which the carbon content is equal to 50% of said content C$_0$, the depth p$_{50\%}$ being measured by Glow Discharge Spectrometry, and **in that** said sheet does not contain a layer of iron oxide between said substrate and said metal pre-coating,.

2. Pre-coated sheet according to claim 1, **characterised in that** the composition of said steel substrate comprises, the contents being expressed by weight:

$$0.09\% \leq C \leq 0.38\%$$

$$0.8\% \leq Mn \leq 1.5\%$$

$$0.1\% \leq Si \leq 0.35\%$$

$$0.01\% \leq Cr \leq 0.3\%$$

$$0.02\% \leq Ti \leq 0.1\%$$

$$0.001\% \leq Al \leq 0.25\%$$

$$S \leq 0.05\%$$

$$P \leq 0.1\%$$

$$0.002\% \leq B \leq 0.005\%,$$

optionally

$$0.0005\% \leq Ca \leq 0.005\%,$$

the remainder of the composition being composed of iron and unavoidable impurities resulting from processing.

3. Pre-coated sheet according to claim 1 or 2, **characterised in that** the composition of said steel substrate comprises, the content being expressed by weight:

$$0.15\% \leq C \leq 0.25\%.$$

4. Pre-coated sheet according to claim 1 or 2, **characterised in that** the composition of said steel substrate comprises, the contents being expressed by weight:

$$0.20\% \leq C \leq 0.25\%$$

$$1.1\% \leq Mn \leq 1.35\%$$

$$0.15\% \leq Si \leq 0.35\%$$

$$0.02\% \leq Al \leq 0.06\%$$

$$0.02\% \leq Ti \leq 0.05\%$$

$$0.02\% \leq Cr \leq 0.25\%$$

$$0.002\% \leq B \leq 0.004\%$$

the remainder of the composition being composed of iron and unavoidable impurities resulting from processing.

5. Pre-coated sheet according to any one of claims 1 to 4, **characterised in that** said steel substrate has an oxygen content $O_0$ and has, beneath the interface between the pre-coating and said substrate, at a depth located between 0 and 5 micrometres starting from said interface, an average oxygen content $O_m$, $O_m/O_0$ being greater than 15

6. Pre-coated sheet according to any one of claims 1 to 5, **characterised in that** said substrate contains, in an area located between 0 and 5 micrometres beneath the interface between said pre-coating and said substrate, oxides comprising at least one element selected from a group consisting of titanium, silicon, manganese, aluminium, chromium, the density of said oxides with a diameter greater than 1 micrometre **in that** area being greater than 50/mm$^2$.

7. Pre-coated sheet according to any one of claims 1 to 6, **characterised in that** the depth $p_{50\%}$ of the decarburised area being between 9 and 30 micrometres.

8. Pre-coated sheet according to claim 7, **characterised in that** the depth $p_{50\%}$ of the decarburised area being between 12 and 30 micrometres.

9. Pre-coated sheet according to any one of claims 1 to 8, **characterised in that** the sheet has a thickness between 0.5 and 2.6 mm.

Fig. 1

Fig. 2

(teneur locale en carbone)/
(teneur nominale en carbone C0)

100%

50%

12

11

P50%     Distance à partir de l'interface 9

Fig. 3

Angle de pliage critique αc (°)

d (µm)

Fig. 4

Fig. 5

Fig. 6

Fig. 7

Fig. 8

Fig. 9

Fig. 10

Fig. 11

Pré-revêtement

Substrat

Figure 12

5 µm

Pré-revêtement

Substrat

Fig. 13

5 µm

Fig. 14

Fig. 15

26

Fig. 16

## RÉFÉRENCES CITÉES DANS LA DESCRIPTION

### Documents brevets cités dans la description

- FR 2780984
- FR 2807447
- WO 2009080292 A
- WO 2011069906 A2

### Littérature non-brevet citée dans la description

- JANAF Thermomechanical Tables. Journal of Physical and Chemical Reference Data. l'American Chemical Society and the American Institute of Physics for the National Bureau of Standards, 1985, vol. 14